# EUROPÄISCHE PATENTANMELDUNG

(11) **EP 1 987 945 A1**
(43) Veröffentlichungstag der Anmeldung: **05.11.2008**
(21) Anmeldenummer: 07107527.9
(22) Anmeldetag: 04.05.2007
(51) Int. Cl.: B29C 70/88, G01N 25/72

(54) **Halbzeug zur Herstellung von Bauteilen aus faserverstärkten Verbundwerkstoffen**

(71) Anmelder: SGL Carbon AG, 65203 Wiesbaden (DE)
(72) Erfinder: Bruch, Christian, 83666 Waakirchen (DE); Heine, Michael, 86695 Allmannshofen (DE); Friedrich, Claus, 86508 Rehling (DE)
(74) Vertreter: Roßberg, Karin

(57) **Zusammenfassung**

Die Erfindung betrifft ein flächiges oder dreidimensionales Halbzeug für die Herstellung von Bauteilen aus faserverstärkten Verbundwerkstoffen, wobei das Halbzeug folgende Komponenten umfasst: eine aus Verstärkungsfasern gebildete zwei- oder dreidimensionale Struktur, optional einen Matrixbildner in der aus den Verstärkungsfasern gebildeten Struktur und mindestens einen sich kontinuierlich von einem Rand des Halbzeugs zu einem zweiten Rand des Halbzeugs erstreckenden Strang (1) aus elektrisch leitfähigen Fasern, weicher mindestens zwei Kontaktstellen für eine elektrische Kontaktierung aufweist und gegenüber seiner Umgebung im Halbzeug elektrisch isoliert ist. Die mit Kontaktstellen versehenen elektrisch leitfähigen Faserstränge erlauben die Einleitung elektrischer Energie in die Faserverbund-Struktur und deren Untersuchung mittels elektrischer Signale.

## Beschreibung

Die vorliegende Erfindung betrifft ein Halbzeug zur Herstellung von Bauteilen aus faserverstärkten Verbundwerkstoffen.

Es ist bekannt, Bauteile aus faserverstärkten Verbundwerkstoffen aus flächigen oder dreidimensionalen Halbzeugen aufbauen, welche die Verstärkungsfasern und gegebenenfalls einen Matrixbildner wie ein Harz, einen Kunststoff oder einen Keramikbildner (precursor) enthalten. Typische flächige Halbzeuge gemäß dem Stand der Technik sind beispielsweise Prepregs, in welchen unidirektional angeordnete Verstärkungsfasern durch eine Harz- oder Kunststoffmasse fixiert sind. Weitere typische flächige Halbzeuge werden durch textile Prozesse hergestellt wie Gewebe, unidirektionale Gelege, Gewirke und Gestricke sowie Vliese und Filze aus Verstärkungsfasern. Auch diese Halbzeuge können im Prepregzustand vorliegen, indem sie mit einer Imprägnierung aus einem Matrixbildner (Harz oder Kunststoff) versehen werden. Dreidimensionale Halbzeuge sind beispielsweise mehrlagige Stapel aus den vorgenannten flächigen Halbzeugen, wobei in einem solchen Stapel verschiedene flächige Halbzeuge kombiniert werden können; oder multiaxiale Gelege, welche mehrere über einander gelegte, miteinander vernähte Lagen aus parallel ausgerichteten Verstärkungsfasern umfassen, wobei sich die Orientierung der Verstärkungsfasern von Lage zu Lage ändert. Eine weitere Art von dreidimensionalen Halbzeugen für die Herstellung von Bauteilen aus faserverstärkten Verbundwerkstoffen sind Preforms, wie zum Beispiel geflochtene Schläuche oder Knotenelemente, die auf Rundflechtmaschinen hergestellt werden.

Sowohl während der Herstellung als auch während der Benutzung von Bauteilen aus faserverstärkten Verbundwerkstoffen kann es notwendig sein, den strukturellen Zustand des Bauteils zu überwachen. Dies kann bewerkstelligt werden, indem an geeigneten Stellen des Bauteils Sensoren angebracht werden, die ein Signal, insbesondere ein elektrisches Signal liefern, das Rückschlüsse auf den strukturellen Zustand des Bauteils erlaubt. Bekannt sind Faserverbund-Bauteile mit Sensoren zur Überwachung einer oder mehrerer Funktionalitäten des Werkstoffs bzw. des Bauteils. Übliche Sensoren sind piezoelektrische Fasermodule, Dehnungsmessstreifen, faseroptische Sensoren in Form von Glasfasern oder Faser-Bragg-Gitter-Sensoren. Diese Sensoren werden als Einzelkomponenten hergestellt und erst bei der Fertigung des den Sensor enthaltenden Bauteils mit vorab ebenfalls als Einzelkomponenten hergestellten Halbzeugen aus Verstärkungsfasern zusammengeführt.

Dieses Konzept ist beispielsweise in DE 10 2004 008 432 beschrieben

Gemäß DE 10 2004 008 432 wird ein Dehnungsmessstreifen zur Messung von Dehnungen und Stauchungen an Verformungskörpern aus einem dünnen elektrischen Leitermaterial, speziell aus Carbonfasersträngen ausgebildet. An den Endbereichen des Messstreifens befinden sich elektrische Kontaktierungselemente. Die leitfähigen Faserstränge sind von einer Isolierschicht umgeben.

Derartige Dehnungsmessstreifen werden beispielsweise auf den Oberflächen von speziellen Verformungskörpern in Kraftaufnehmern, Wägezellen, Druck- oder Drehmomentaufnehmern oder direkt auf belasteten Bauteilen wie Fahrzeug- oder Flugzeugteilen appliziert. Das Aufbringen des Dehnungsmessstreifens auf das zu überwachende Bauteil erfolgt mittels Kleben. Gegebenenfalls wird der Dehnungsmessstreifen zuerst auf eine Trägerfolie aufgebracht, und diese Anordnung dann auf das zu überwachende Bauteil appliziert.

Um umfassendere Informationen über den strukturellen Zustand des zu überwachenden Bauteils zu erhalten, ist es jedoch wünschenswert, die als Sensor fungierenden leitfähigen Faserstränge bereits in die zur Fertigung des Bauteils benutzten Halbzeuge zu integrieren und im Inneren des Bauteils zu positionieren.

Mit der vorliegenden Erfindung wird ein flächiges oder dreidimensionales Halbzeug für die Herstellung von Bauteilen aus faserverstärkten Verbundwerkstoffen hergestellt, wobei das Halbzeug folgende Komponenten umfasst:
eine aus Verstärkungsfasern gebildete zwei- oder dreidimensionale Struktur,
optional einen Matrixbildner in der aus den Verstärkungsfasern gebildeten Struktur mindestens einen sich kontinuierlich von einem Rand des Halbzeugs zu einem zweiten Rand des Halbzeugs erstreckenden Strang aus elektrisch leitfähigen Fasern, welcher mindestens zwei Kontaktstellen für eine elektrische Kontaktierung aufweist und gegenüber seiner Umgebung im Halbzeug elektrisch isoliert ist.

In einer Variante enthält das Halbzeug mehrere sich kontinuierlich von einem Rand des Halbzeugs zu einem zweiten Rand des Halbzeugs erstreckende elektrisch leitfähige Faserstränge, die miteinander in Verbindung stehen, beispielsweise in Gestalt einer netzwerkartigen Struktur. Alternativ oder zusätzlich kann das Halbzeug mehrere separate elektrisch leitfähige Faserstränge mit jeweils mindestens einer Kontaktstelle enthalten, wobei zwischen den Fasersträngen kein elektrischer Kontakt besteht.

Das erfindungsgemäße Halbzeug kann mit weiteren erfindungsgemäßen oder/und herkömmlichen Halbzeugen zu einem Faserverbund-Bauteil kombiniert werden.

Die mit Kontaktstellen versehenen elektrisch leitfähigen Faserstränge erlauben die Einleitung elektrischer Energie in die Faserverbund-Struktur und die Untersuchung der Struktur mittels elektrischer Signale.

Weitere Details, Varianten und Vorteile der Erfindung können der folgenden ausführlichen Beschreibung, den Figuren und den Ausführungsbeispielen entnommen werden.

Die Figuren zeigen:
- Figur 1: eine Vorrichtung zur Herstellung von Kontaktstellen an einem elektrisch leitfähigen Faserstrang durch galvanische Metallabscheidung
- Figur 2: ein Verfahren zur Herstellung eines erfindungsgemäßes Halbzeugs
- Figur 3: ein erfindungsgemäßes Halbzeug in Form eines mehrlagigen Prepregs
- Figur 4: einen Häkelprozess zur Herstellung einer Isolierschicht an den leitfähigen Fasersträngen
- Figur 5: ein erfindungsgemäßes Halbzeug in Form eines Multiaxial-Geleges.
- Figur 6: die Herstellung eines Halbzeugs in Form eines Multiaxial-Geleges auf einer Kettenwirkmaschine

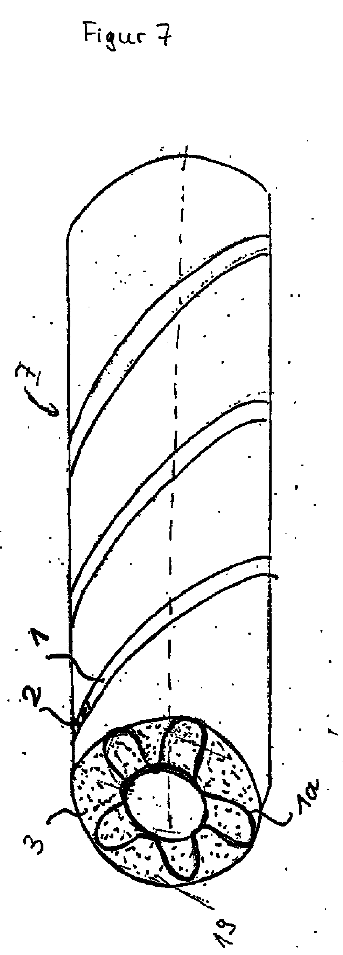

- Figur 7: ein Bauteil in Form einer Welle, welche das erfindungsgemäße Halbzeug in Form eines Multiaxial-Geleges enthält
- Figur 8: eine Methode zur Qualitätskontrolle der Faserverbund-Struktur und zur Ermittlung der Position von Kontaktstellen mittels Wärmebildkamera

Das erfindungsgemäße Halbzeug weist eine der vorgenannten bekannten flächigen oder dreidimensionalen Strukturen aus Verstärkungsfasern auf. Bevorzugt handelt es sich bei dem Halbzeug um ein unidirektionales Prepreg, ein unidirektionales Gelege oder ein Multiaxialgelege.

Die Verstärkungsfasern sind beispielsweise Glasfasern, Keramikfasern, Carbonfasern, Aramidfasern, wobei die Erfindung nicht auf bestimmte Sorten von Verstärkungsfasern beschränkt ist.

Gemäß einer Variante der Erfindung befindet sich die aus den Verstärkungsfasern gebildete Struktur im Prepregzustand, d.h. sie ist mit einem polymeren oder keramikbildenden Matrixbildner imprägniert. Im Falle von duroplastischen polymeren Matrixbildern, wie Epoxiden oder Polyesterharzen, sind diese noch nicht ausgehärtet. Der Matrixbildner kann auch in Form von Fäden oder Fasern, beispielsweise schmelzbaren Fasern aus einem Thermoplast, in die aus Verstärkungsfasern gebildete Struktur eingebracht sein.

Die elektrisch leitfähigen Fasern sind vorzugsweise Carbonfasern (Kohlenstofffasern). Es kommen Stränge (Rovings) aus mehreren 100 bis zu mehreren 1000 Einzelfilamenten zum Einsatz. Alternativ werden organischer Fasern verwendet, deren elektrische Leitfähigkeit mittels Einbau von Kohlenstoffpartikeln oder carbon nanotubes eingestellt wird.

Die elektrische Kontaktierung der elektrisch leitfähigen Faserstränge erfolgt über an den Fasersträngen angebrachte Kontaktstellen. Hierzu weist der Strang aus leitfähigen Fasern jeweils an den Kontaktstellen einen metallbeschichteten Bereich auf. Die Metallisierung der Kontaktstelle wird durch übliche Verfahren, wie galvanische Metallabscheidung oder Bedampfen, erzeugt. Die Kontaktstellen werden so positioniert, dass sie sich nach der Herstellung des Bauteils an einer vorher festgelegten, für die beabsichtigte Nutzung günstigen Position befinden. Anzahl, Abstand und Positionierung der Kontaktstellen richtet sich nach der Funktion, die der leitfähige Faserstrang während der Herstellung bzw. Nutzung des Bauteils zu erfüllen hat. Die Kontaktierung des leitfähigen Faserstrangs erfolgt über eine an den Kontaktstellen angeschlossene, beispielsweise angelötete Verkabelung, die mit einer Spannungsquelle und den benötigten Messgeräten verbunden wird.

Die Ausführung der elektrischen Isolierung der Faserstränge hängt wesentlich von der elektrischen Leitfähigkeit der anderen Bestandteile des Halbzeugs und des herzustellenden Bauteils ab.

Gemäß einer Variante wird der Faserstrang mit einer Isolationsschicht, vorzugsweise aus Kunstharz, versehen. Konventionelle Verstärkungsfasern sind üblicherweise mit einer Schlichte versehen. Diese Schlichte wird aufgebracht, indem die Fasern in einem kontinuierlichen Prozess, z.B. beim Durchlauf durch ein Tauchbecken, mit der Schlichte benetzt werden. Für die elektrisch leitfähigen Faserstränge ist diese Schlichte vorzugsweise deutlich dicker ausgeführt als üblicherweise bei Verstärkungsfasern, so dass sie eine zuverlässige Isolierschicht bildet.

Die elektrische Isolierung der elektrisch leitfähigen Faserstränge lässt sich auch erzielen, indem elektrisch nicht leitende Kunststofffasern um den zu isolierenden Faserstrang herum angeordnet werden. In einer bevorzugten Variante werden hierzu Kunststofffasern, z.B. aus Polyethylen verwendet, mit denen der zu isolierende Faserstrang umhäkelt wird.

Enthält die zwei- oder dreidimensionale Struktur aus Verstärkungsfasern leitfähige Verstärkungsfasern, z.B. Carbonfasern, dann kann die Isolierung auch durch Vorsehen einer flächigen Isolierschicht zwischen den kontaktierbaren leitfähigen Fasersträngen und der leitfähige Verstärkungsfasern enthaltenden Struktur gebildet werden. Beispielsweise kann die Isolierschicht aus nichtleitenden Verstärkungsfasern wie Glasfasern gebildet werden.

Wenn das erfindungsgemäße Halbzeug sowie ggf. im herzustellenden Faserverbund-Bauteil benachbarte Halbzeuge keine weiteren leitfähigen Bestandteile enthalten, so ist es nicht erforderlich, die leitfähigen Faserstränge selbst mit einer Isolierschicht zu versehen. Die Isolierung der leitfähigen Faserstränge erfolgt dann durch die isolierende Umgebung im Halbzeug und im fertigen Bauteil.

Die Integration der elektrisch leitfähigen Faserstränge in die Struktur aus Verstärkungsfasern kann grundsätzlich mit den bekannten Herstellungsprozessen für Faserhalbzeuge erfolgen, wobei diese Prozesse so modifiziert werden, dass die elektrisch leitfähigen Faserstränge an den gewünschten Positionen und in der gewünschten Orientierung zugeführt werden. Die erfindungsgemäßen Halbzeuge unterscheiden sich somit von den gemäß dem Stand der Technik verwendeten Halbzeugen aus Verstärkungsfasern im wesentlichen dadurch, dass sie neben Verstärkungsfasern die mit Kontaktstellen versehenen elektrisch leitfähigen Faserstränge enthalten.

Der mit den Kontaktstellen und ggf. einer Isolierung versehene elektrisch leitfähige Faserstrang wird beispielsweise in einem textilen Prozess wie Weben, Flechten, Nähen, Wirken u.ä. mit den Verstärkungsfasern zu einem erfindungsgemäßen Halbzeug verbunden. In dem so erhaltenen Gewebe, Geflecht, Gelege oder sonstigen textilen Halbzeuge sind an den gewünschten Positionen die Verstärkungsfasern durch kontinuierliche, mit Kontaktstellen und ggf. einer Isolierung versehene leitfähigen Faserstränge ersetzt. Enthält das textile Halbzeug Näh- oder Bindefäden, wie beispielsweise in einem Gelege, können diese Näh- oder Bindefäden durch mit Kontaktstellen und ggf. einer Isolierung versehene leitfähige Faserstränge gebildet werden.

So ist in einer Ausführungsform der vorliegenden Erfindung die von den Verstärkungsfasern gebildete Struktur ein multiaxiales Gelege, und in mindestens einer der Lagen des multiaxialen Geleges sind an mindestens einer Position die Verstärkungsfasern durch einen mit Kontaktstellen versehenen kontinuierlichen elektrisch leitfähigen Faserstrang ersetzt oder/und mindestens einer der Bindefäden des multiaxialen Geleges wird durch einen kontinuierlichen, mit Kontaktstellen versehene leitfähigen Faserstrang gebildet.

Alternativ kann ein erfindungsgemäßes Halbzeug hergestellt werden, indem die mit Kontaktstellen versehenen leitfähigen Faserstränge und die Verstärkungsfasern durch einen Matrixbildner fixiert und zu einem handhabbaren Halbzeug verbunden werden.

Die in das erfindungsgemäße Halbzeug bzw. das dieses Halbzeug enthaltende Bauteil integrierten kontinuierlichen elektrisch leitfähigen und mit elektrischen Kontaktstellen versehenen Faserstränge können während der Fertigung und Benutzung des Faserverbund-Bauteils verschiedene Funktionen ausführen.

In Verbindung mit einer Spannungsquelle können die leitfähigen Faserstränge als elektrisches Heizelement wirken, denn wegen des elektrischen Widerstands der Faserstränge wird beim Durchfluss von elektrischem Strom Wärme erzeugt. Dieser Effekt kann in verschiedenen Situationen genutzt werden, wie beim Härten eines Matrixbildners während der Fertigung oder wenn bei der Benutzung des Faserverbund-Bauteils eine Erwärmung nötig ist, beispielseise zur Enteisung.

Ein weiteres wesentliches Anwendungsgebiet stellt die Schadenserkennung und Fertigungskontrolle dar. Durch die Erwärmung der Struktur beim Stromfluss in den elektrisch leitfähigen Fasersträngen können übliche thermisch basierte Kontrollverfahren der zerstörungsfreien Prüfung besonders zuverlässig angewendet werden. Sowohl beim Thermographie- als auch bei Shearographieverfahren wird die Faserverbund-Struktur herkömmlich durch externe Wärmequellen in Form von Heizstrahlern oder Lichtblitzen erwärmt. Nachteil dieser Verfahren ist, dass der Wärmeeintrag über die Oberfläche erfolgt und somit bei dickeren Bauteilen, wie z.B. einem Rotor für Windkraftanlagen, Schäden im Inneren des Bauteils unentdeckt bleiben können. Durch die mittels der erfindungsgemäßen Halbzeuge im Inneren des Bauteils angeordneten elektrisch leitfähigen Faserstränge ist es aber möglich, im Inneren des zu untersuchenden Bauteils Wärme zu erzeugen, und so Informationen über das Innere des Bauteils zu erlangen.

Weiterhin kann die Änderung des elektrischen Widerstands der elektrisch leitfähigen Faserstränge als Sensorsignal genutzt werden. Dafür werden die Halbzeuge mit den leitfähigen Fasersträngen so positioniert, dass sie im fertigen Faserverbund-Bauteil schlaggefährdete Stellen überwachen können. Beim Aufschlag eines Gegenstandes auf die Faserverbund-Struktur treten im Inneren der Struktur Schädigungen in Form von Delaminationen oder Mikrorissen auf. Diese Schädigungen haben Rückwirkung auf den elektrischen Widerstand der leitfähigen Faserstränge.

Aus der Abhängigkeit des Widerstandes der leitfähigen Faserstränge von der umgebenden Bauteilstruktur können verschiedene Informationen gewonnen werden. Beispielsweise wird der elektrische Widerstand des leitfähigen Faserstrangs zum Zeitpunkt der Auslieferung des Bauteils gemessen. Ist bei späteren Kontrollmessungen eine Veränderung zu beobachten, hat die Struktur Schaden genommen.

Es kann auch eine kontinuierliche Kontrolle des elektrischen Widerstands während des Einsatzes des Bauteils erfolgen. Zum Zeitpunkt eines Schlagschadens tritt eine starke Änderung des elektrischen Widerstands auf. Wird durch den aufgetretenen Schaden der leitfähige Faserstrang unterbrochen, dann ist dies durch einen Anstieg des Widerstands auf einen unendlichen Wert bemerkbar.

Weiterhin kann die Piezoresistivität des leitfähigen Faserstrangs in Verbindung mit geeigneten elektronischen Komponenten in Form von Ergänzungswiderständen und Messverstärkern zur Dehnungsmessung genutzt werden. Bei einer mechanischen Verformung des leitfähigen Faserstrangs kommt es zu einer Änderung von dessen Querschnitt und damit zu einer Veränderung des elektrischen Widerstands, die proportional zur Verformung ist.

Beispielsweise können die leitfähigen Faserstränge genutzt werden, um die Verformung eines Faserverbund-Bauteils bei einer Referenzlast zu messen. Liegt die Verformung im zuvor spezifizierten Rahmen, erfolgt die Freigabe des Bauteils.

Zwei separate, d.h. miteinander nicht in elektrischem Kontakt stehende leitfähige Faserstränge können so kontaktiert werden, dass sie als kapazitives Element wirken. Die Kapazität wird bestimmt durch die dielektrischen Eigenschaften des zwischen den beiden Fasersträngen liegenden, aus Verstärkungsfasern und polymerer Matrix bestehenden Materials. Auf diese Weise kann beispielsweise die Vernetzungsreaktion des Matrixbildners überwacht und kontrolliert werden. Mit fortschreitender Vernetzung verändert sich die Kapazität, da die Viskosität der Matrix und damit die Beweglichkeit der Dipole der polymeren Matrix abnimmt.

### Ausführungsbeispiele

### Herstellung der Kontaktstellen an den elektrisch leitfähigen Fasersträngen

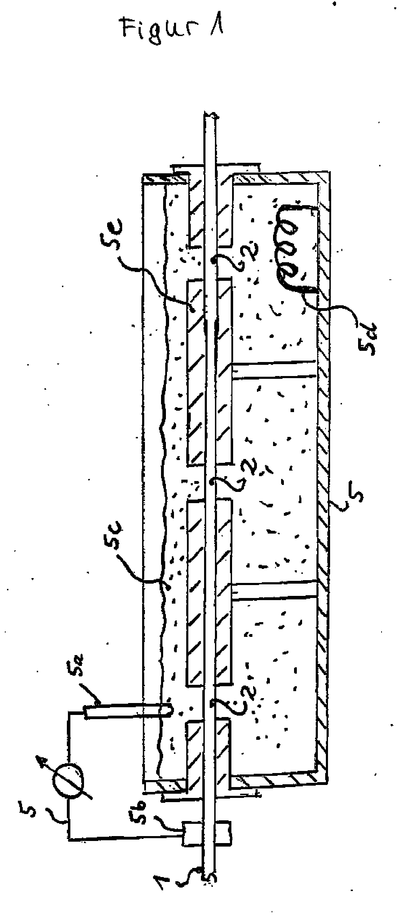

Die Herstellung der Kontaktstellen an den elektrisch leitfähigen Fasersträngen erfolgt in einem galvanischen Prozess gemäß Figur 1.

Der Strang 1 aus elektrisch leitfähigen Fasern durchläuft abschnittsweise ein galvanisches Bad. Die Vorrichtung für das galvanische Bad enthält eine Spannungsquelle, eine Anode 5a und eine Kathode. Die Kathode wird durch den leitfähigen Faserstrang 1 mit dem Kontaktelement 5b gebildet. Der Elektrolyt 5c wird über eine Heizung 5d temperiert. Entlang dem Faserstrang 1 erfolgt an vorher festgelegten Stellen 2 eine Metallisierung durch galvanische Abscheidung eines geeigneten Metalls, beispielsweise Nickel. Hierzu wird der Faserstrang in den Bereichen, die nicht beschichtet werden sollen, durch Hülsen 5e abgedeckt.

### Herstellung eines Halbzeugs in Form eines Prepregs

Im folgenden wird die Herstellung eines erfindungsgemäßen Halbzeugs beschrieben, in welchem Glasfasern als Verstärkungsfasern und mit Kontaktstellen versehene leitfähige Faserstränge durch einen Matrixbildner in Form einer noch nicht ausgehärteten Kunststoffmasse fixiert sind (Prepreg).

Zur Herstellung des Halbzeuges wird mindestens ein wie vorstehend beschrieben mit Kontaktstellen 2 versehener leitfähiger Faserstrang 1 mit einer aus Glasfasern gebildeten Struktur 3 und einer matrixbildenden Kunststoffmasse zusammengeführt. Dabei können die in das Halbzeug einzubringenden leitfähigen Faserstränge 1 mit Kontaktstellen 2 auch in Form eines zusammenhängenden Netzwerks bereitgestellt werden.

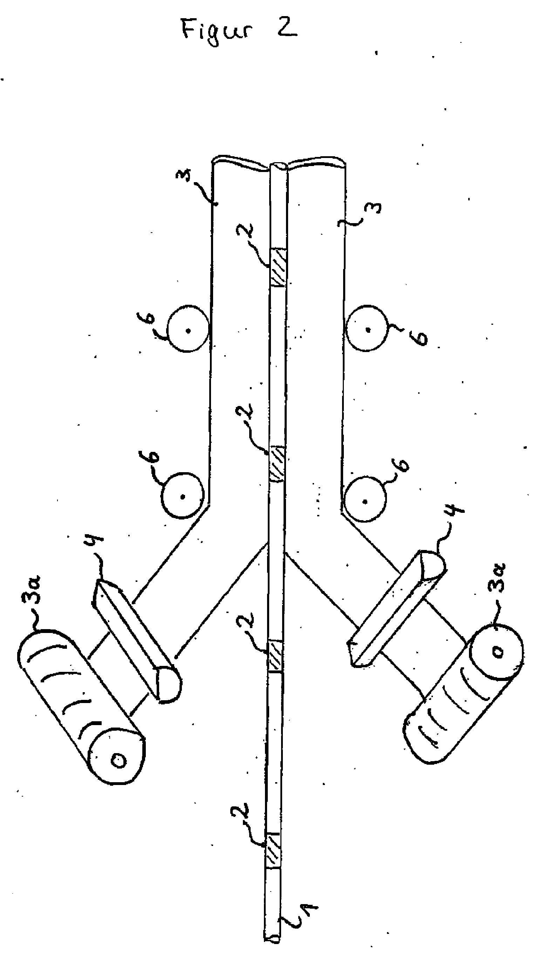

Wie in Figur 2 gezeigt, sind aus Glasfasern gebildete Strukturen 3, beispielsweise in Form einer Vielzahl nebeneinander angeordneter Glasfasern, auf Spulen 3a aufgerollt und werden über Rollen 6 an den mit Kontaktstellen 2 versehenen leitfähigen Faserstrang 1 heran geführt. Die von den Spulen 3a abgezogenen Glasfasern werden über eine Rakeleinheit 4 mit der matrixbildenen Kunststoffmasse benetzt, so dass ein unidirektionales Prepreg erhalten wird. Nach dem Zusammenführen wird der mit Kontaktstellen 2 versehene leitfähige Faserstrang 1 mit den umgebenden Verstärkungsfasern 3 zu einem handhabbaren Halbzeug konsolidiert.

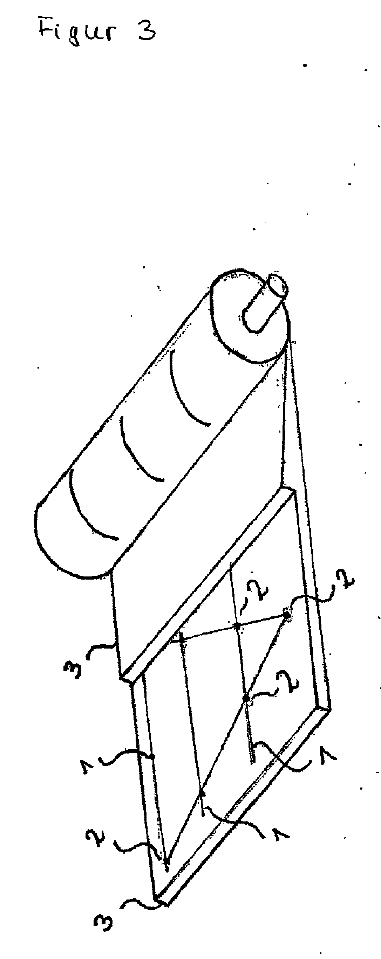

Dieses Halbzeug enthält mindestens einen leitfähigen Faserstrang 1 mit Kontaktstellen 2 sowie Glasfasern 3 als Verstärkungsfasern, die mit einer matrixbildenden Kunststoffmasse versehen sind. Die mit Kontaktstellen versehenen leitfähigen Faserstränge sind durch die Kunststoffmasse und die umgebenden Verstärkungsfasern in ihrer Position fixiert. Vorzugsweise enthält das Halbzeug ein zusammenhängendes Netzwerk aus leitfähigen Fasersträngen 1 mit Kontaktstellen 2, das in Figur 3 durch teilweises Weglassen der oberen Schicht aus Verstärkungsfasern 3 sichtbar gemacht worden ist. Zur Auslieferung kann das Halbzeug aufgerollt werden, dabei verhindert eine Trennfolie das Verkleben des Halbzeugs. Selbstverständlich kann das Halbzeug zusätzlich zu den in Figur 3 gezeigten Verstärkungsfasern 3 weitere Lagen aus Verstärkungsfasern, ggf. auch aus leitfähigen Verstärkungsfasern, enthalten.

Im Beispiel gemäß Figur 3 wird aufgrund der Auswahl von Glasfasern als Verstärkungsfasern die elektrische Isolierung des leitfähigen Faserstrangs 1 durch die umgebenden Verstärkungsfasern 3 realisiert. Eine alternative Ausführung sieht vor, dass die leitfähigen Faserstränge 1 selbst mit einer Isolierschicht versehen werden Dazu durchlaufen die leitfähigen Faserstränge, deren Kontaktstellen 2 gegebenenfalls durch Hülsen abgedeckt werden, vor der Zusammenführung mit den Verstärkungsfasern ein Harzbad. Beim Durchlaufen des Harzbades wird der leitfähige Faserstrang mit einer isolierenden Kunststoffschicht versehen. Bei dieser alternativen Ausführung können als Verstärkungsfasern des Halbzeugs leitfähige Fasern wie beispielsweise Carbonfasern verwendet werden.

### Herstellung von leitfähigen Fasersträngen mit Isolierung

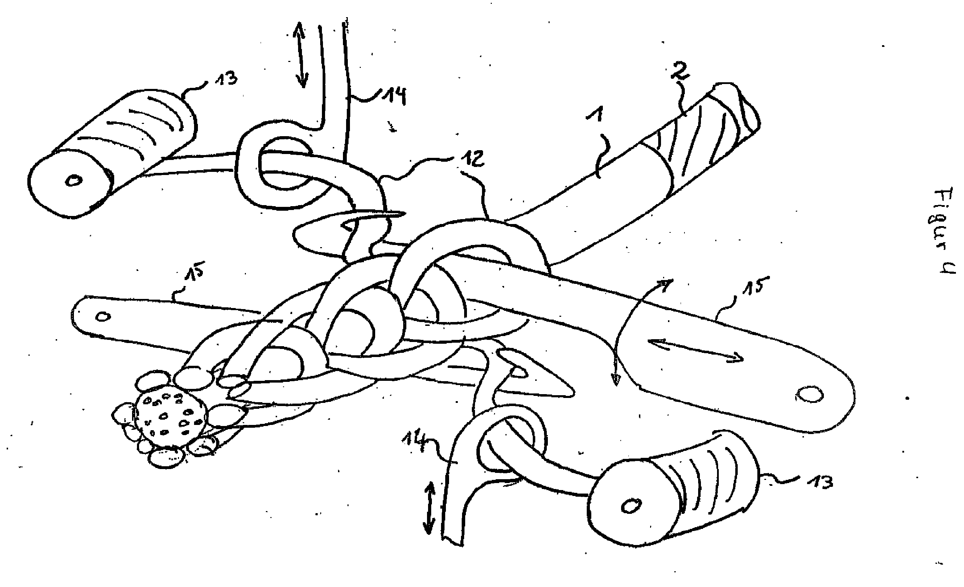

Die beispielsweise mittels der in Figur 1 gezeigten Vorrichtung mit Kontaktstellen 2 versehenen Faserstränge 1 können durch einen Häkelprozess gemäß Figur 4 mit einer Isolierung aus nicht leitfähigen Fäden 12 beispielsweise aus Polyester versehen werden.

Die Polyesterfäden sind auf Spulen 13 aufgewickelt und werden durch Ösen 14 geführt. Die Ösen 14 platzieren durch eine Auf- und Abwärtsbewegung die Polyesterfäden 12 wechselweise auf der Ober- bzw. Unterseite des Faserstrangs 1. Häkelnadeln 15 ziehen die Polyesterfäden in der für den Häkelprozess typischen Weise durch die Schlaufen. Die Häkelnadeln 15 stechen wechselweise jeweils auf der Ober- bzw. Unterseite durch die Schlaufen. Um eine dichte Umschlingung sicherzustellen, können mehrere Häkelnadeln 15 zum Einsatz kommen.

### Herstellung eines Halbzeugs in Form eines Multiaxial-Geleges

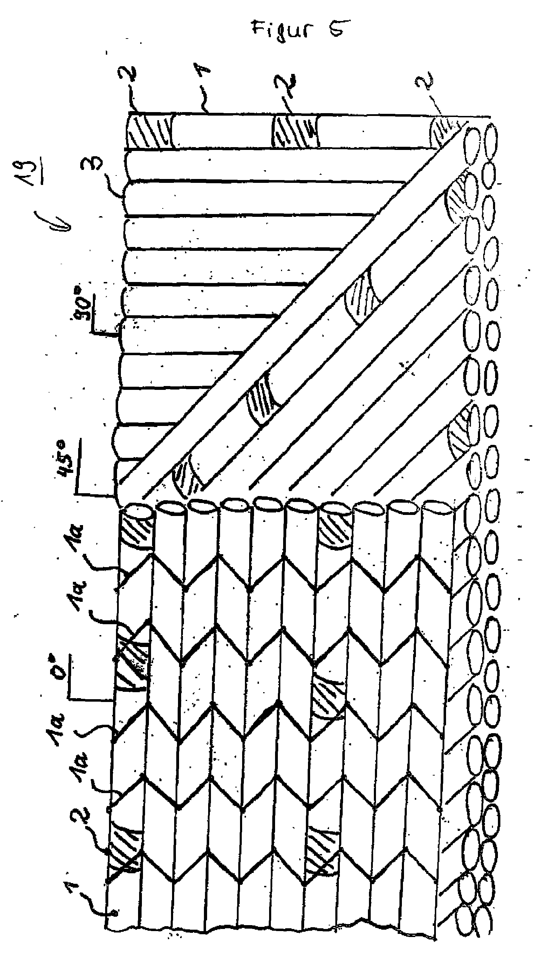

Am Beispiel eines Halbzeugs in Form eines Multiaxialgeleges 19 gemäß Figur 5 wird beschrieben, wie ein mit Kontaktstellen 2 versehene leitfähige Faserstränge 1 enthaltendes Halbzeug durch einen textilen Prozess hergestellt wird. In den Lagen des Multiaxialgeleges sind neben Glasfasern als Verstärkungsfasern 3 leitfähige, wie oben beschrieben mit Kontaktstellen 2 versehene Faserstränge 1 enthalten. Außerdem werden die Bindefäden 1a des Geleges durch leitfähige, wie oben beschrieben mit Kontaktstellen 2 und einer Isolierung 12 versehene Faserstränge gebildet.

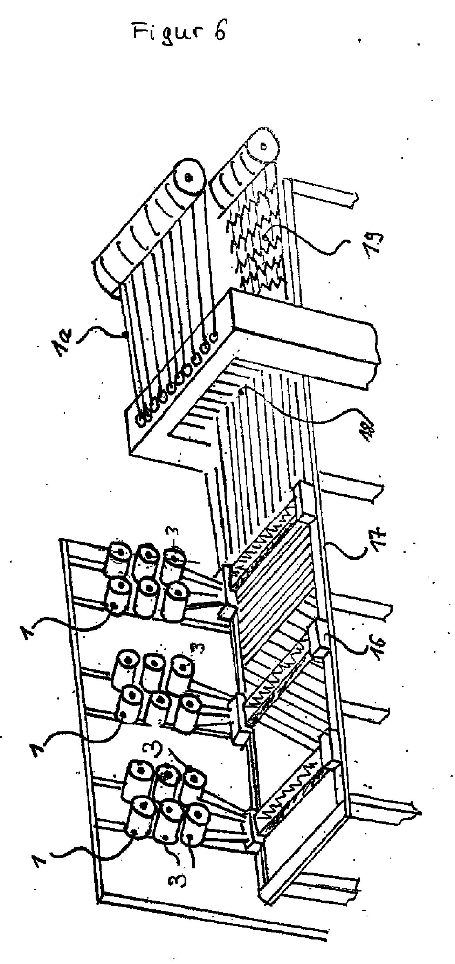

Die Herstellung des Geleges erfolgt in bekannter Weise auf einem Kettenwirkautomat mit multiaxialem Schusseintrag 17 (Figur 6). Die Verstärkungsfasern 3 werden auf Spulen bereitgestellt. Ebenso sind die mit Kontaktstellen 2 versehenen leitfähigen Faserstränge 1 auf Spulen angeordnet. Im ausgewählten Beispiel wird ein Gelege aus drei Lagen mit den Faserorientierungen 0°, 45° und 90° aufgebaut. Für jede Richtung ist ein Schlitten 16 vorhanden, der jeweils die Verstärkungsfasern 3 und auch die leitfähigen Faserstränge 1 in der jeweiligen Orientierung aufspannt. Da im ausgewählten Beispiel die Verstärkungsfasern 3 aus Glas sind, müssen die leitfähigen Faserstränge 1 nicht elektrisch isoliert werden. Die Anzahl der Verstärkungsfasern 3 in jeder Lage ist deutlich höher als die Anzahl der leitfähigen Fasern. Daher entsteht ein Faseraufbau, bei dem zwischen Verstärkungsfasern 3 in größeren, definierten Abständen mit Kontaktstellen 2 versehene kontinuierliche leitfähige Faserstränge 1 angeordnet sind. Im anschließenden Wirkprozess wird das so erhaltene Gelege in bekannter Weise durch einen Bindefaden 1a fixiert. Dazu wird der Bindefaden 1a mit Hilfe von Nadeln 18, die das Gelege durchstechen, durch die Lagen aufgespannter Fasern gezogen. Es entsteht ein Halbzeug in Form eines dreilagigen Geleges 19, dessen Lagen Verstärkungsfasern 3 und leitfähige Faserstränge 1 mit Kontaktstellen 2 enthalten, wobei die Lagen durch Bindefäden 1a fixiert sind. Der Bindefaden besteht aus elektrisch leitfähigen Fasern, die gegenüber dem umgebenden Material durch Polyesterfäden 12, die die leitfähige Faser umschlingen, elektrisch isoliert sind (siehe Figur 4).

### Faserverbund-Bauteil enthaltend ein Halbzeugs in Form eines Multiaxial-Geleges

Bei dem beispielsgemäßen Bauteil handelt es sich um eine schnell drehende Antriebswelle aus Faserverbundwerkstoff, die das vorstehend beschriebene Halbzeug in Form eines Multiaxial-Geleges 19 enthält. Zur Herstellung der Welle wird das Halbzeug über einen Kern gewickelt, in ein Werkzeug eingelegt und unter Druck der matrixbildende Kunststoff injiziert. Nach der Härtung wird der Kern entfernt.

Die so hergestellte Welle 7 enthält einerseits innerhalb der einzelnen Gelegelagen durchgehende mit elektrischen Kontaktstellen versehene leitfähige Faserstränge 1. Weitere durchgehende mit elektrischen Kontaktstellen versehene leitfähige Faserstränge werden durch die die Gelegelagen fixierenden Bindefäden 1a bereitgestellt. Mittels dieser leitfähigen Faserstränge ist es möglich, das Antriebsmoment im Betrieb der Welle zu messen sowie die Welle nach bestimmten Betriebsintervallen auf Schäden zu kontrollieren.

Ein leitfähiger Faserstrang 1 mit zwei Kontaktstellen 2 aus der Lage des Multiaxialgeleges 19, die unter einem Winkel von 45° zur Längsachse der Welle angeordnet ist, kann zur Messung des Antriebsmoments genutzt werden. Bei Belastung der Welle mit einem Torsionsmoment treten Schubspannungen auf, die eine maximale Verformung unter einem Winkel von 45° zur Längsachse hervorrufen. Bei rechtsdrehendem Torsionsmoment wird der leitfähige Faserstrang 1 gestaucht und bei linksdrehendem Moment gezogen. So ist aufgrund des piezoresistiven Effekts dieses leitfähigen Faserstrangs 1 eine eindeutige Detektion von Höhe und Richtung des Moments möglich.

Mittels der leitfähigen Bindefäden 1a lässt sich die Antriebswelle auf Schäden kontrollieren. Die leitfähigen Bindefasern 1a müssen dicht gesetzt werden und ein Netzwerk bilden, um die Welle über die gesamte Länge kontrollieren zu können. Es wird der Gesamtwiderstand des eingebrachten Netzes gemessen. Nur zwei Kontaktpunkte sind notwendig, damit der elektrische Widerstand des Bindefadens bestimmt werden kann. Kommt es im späteren Bauteil zu einer Schädigung, wird der elektrische Widerstand verschoben. Über dieses integrale Messverfahren kann das komplette Bauteil mit einer Messung auf Schäden kontrolliert werden.

Weiterhin kann der elektrische Widerstand der in Längsrichtung der Welle verlaufenden leitfähigen Fasern 1 zur Überwachung herangezogen werden. Tritt eine starke Veränderung gegenüber einem Referenzsignal auf, muss davon ausgegangen werden, dass die Welle schadhaft ist.

Zur weiteren Untersuchung können die leitfähigen Faserstränge als Heizelement genutzt werden, um mittels Thermografie weitere Informationen zu Schadenshöhe und zur Lokalität von Schäden zu gewinnen.

### Qualitätskontrolle mittels Wärmebildkamera

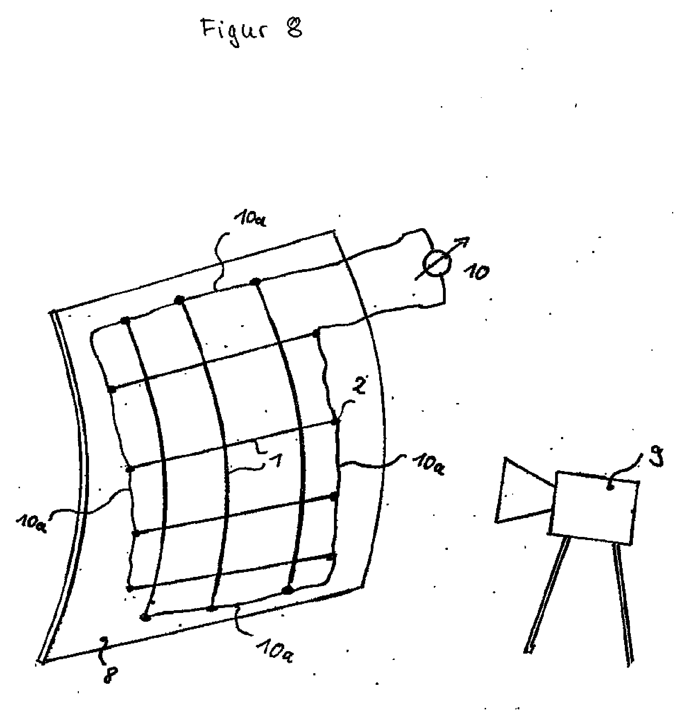

Das zu untersuchende Bauteil 8, das mindestens ein Halbzeug mit elektrisch kontaktierbaren leitfähigen Fasersträngen enthält, wird wie in Figur 8 dargestellt, vor einer Wärmebildkamera 9 positioniert. Über Kabel 10a werden die Kontaktstellen 2 der netzwerkartig angeordneten leitfähigen Faserstränge 1 mit einer Spannungsquelle 10 verbunden.

Aufgrund des elektrischen Widerstandes erwärmen sich die stromdurchflossenen leitfähigen Faserstränge. Über die Wärmebildkamera 9 kann der Wärmefluss in der Faserverbund-Struktur abgebildet werden. Dies kann zur Kontrolle der Fertigungsqualität des hergestellten Bauteils genutzt werden. Bei schadhaften Bauteilen, die Lunker oder Delaminationen aufweisen, erfolgt ein ungleichmäßiger Wärmeabfluss.

Im Gegensatz zur herkömmlichen Qualitätskontrolle durch Thermographie oder Shearographie wird die Faserverbund-Struktur bei dem erfindungsgemäßen Verfahren nicht durch externe Wärmequellen von außen, sondern im Inneren des Bauteils erwärmt. Dadurch ist es möglich, Informationen über das Innere des Bauteils zu erlangen.

Andererseits ermöglicht die Beobachtung mit der Wärmebildkamera das Auffinden weiterer Kontaktierungspunkte in der Faserverbund-Struktur. Im Vergleich zur restlichen Struktur ist der Wärmefluss an den Kontaktstellen 2 aufgrund der Metallisierung deutlich stärker. Die Position solcher Kontaktstellen 2 auf den leitfähigen Fasersträngen 1 kann so von der Wärmebildkamera 9 ermittelt werden. Enthält die Faserverbund-Struktur mehrere, voneinander unabhängige Netzwerke leitfähiger Faserstränge 1 mit Kontaktstellen 2, beispielsweise in verschiedenen Lagen eines Multiaxialgeleges wie in Figur 5, so lassen sich durch Stromfluss in einem ersten Netzwerk und Abbildung mittels Wärmebildkamera die Positionen von Kontaktstellen der weiteren Netzwerke ermitteln.

Die ermittelten Positionen können markiert und anschließend durch Bohren o.a. geeignete Methoden freigelegt werden. An den freigelegten Kontaktstellen können wiederum Kabel angeschlossen werden, so dass nun weitere Bereiche des Bauteils elektrisch kontaktiert und untersucht werden können.

## Patentansprüche

1. Halbzeug für die Herstellung von faserverstärkten Verbundwerkstoffen, umfassend eine zwei- oder dreidimensionale Struktur aus Verstärkungsfasern (3) und optional einen Matrixbildner in der aus Verstärkungsfasern gebildeten Struktur
**dadurch gekennzeichnet, dass**
das Halbzeug mindestens einen sich kontinuierlich von einem Rand des Halbzeugs zu einem zweiten Rand des Halbzeugs erstreckenden Strang (1) aus elektrisch leitfähigen Fasern enthält, welcher mindestens zwei Kontaktstellen (2) für eine elektrische Kontaktierung aufweist und gegenüber seiner Umgebung im Halbzeug elektrisch isoliert ist.

2. Halbzeug gemäß Anspruch 1, **dadurch gekennzeichnet, dass**
das Halbzeug mehrere sich kontinuierlich von einem Rand des Halbzeugs zu einem zweiten Rand des Halbzeugs erstreckende elektrisch leitfähige, mit Kontaktstellen (2) versehene Faserstränge (1) enthält, die miteinander in Verbindung stehen.

3. Halbzeug gemäß Anspruch 1, **dadurch gekennzeichnet, dass**
das Halbzeug mehrere separate elektrisch leitfähige, mit jeweils mindestens einer Kontaktstelle (2) versehen Faserstränge (1) enthält, zwischen denen kein elektrischer Kontakt besteht.

4. Halbzeug gemäß Anspruch 1, **dadurch gekennzeichnet, dass**
die Verstärkungsfasern (3) Glasfasern, Keramikfasern, Carbonfasern oder Aramidfasern sind

5. Halbzeug gemäß Anspruch 1, **dadurch gekennzeichnet, dass**
die leitfähigen Faserstränge (1) Rovings aus Carbonfasern sind.

6. Halbzeug gemäß Anspruch 1, **dadurch gekennzeichnet, dass**
die leitfähigen Faserstränge (1) an den Kontaktstellen (2) eine Metallbeschichtung aufweisen.

7. Halbzeug gemäß Anspruch 1, **dadurch gekennzeichnet, dass**
die leitfähigen Faserstränge (1) mit einer Isolierschicht versehen sind.

8. Halbzeug gemäß Anspruch 1, **dadurch gekennzeichnet, dass**
die Isolierung der leitfähigen Faserstränge (1) durch die Verstärkungsfasern (3) oder/und den Matrixbildner erfolgt.

9. Halbzeug gemäß Anspruch 1, **dadurch gekennzeichnet, dass**
die leitfähigen Faserstränge (1) mit isolierenden Fäden (12) umhäkelt sind.

10. Halbzeug gemäß Anspruch 1, **dadurch gekennzeichnet, dass**
der Matrixbildner einen polymeren oder keramikbildenden Werkstoffen enthält.

11. Halbzeug gemäß Anspruch 1, **dadurch gekennzeichnet, dass**
die aus Verstärkungsfasern (3) gebildete Struktur ein unidirektionales Prepreg, ein Gewebe, ein unidirektionale Gelege, ein Gewirk, Gestrick, Vlies, Filz, ein Preform oder ein multiaxiales Gelege ist.

12. Halbzeug gemäß Anspruch 11, **dadurch gekennzeichnet, dass**
in der aus Verstärkungsfasern (3) gebildete Struktur an den gewünschten Positionen die Verstärkungsfasern (3) durch kontinuierliche, mit Kontaktstellen (2) versehene leitfähige Faserstränge (1) ersetzt sind.

13. Halbzeug gemäß Anspruch 1, **dadurch gekennzeichnet, dass**
die aus Verstärkungsfasern (3) gebildete Struktur Näh- oder Bindefäden enthält, wobei mindestens einer der Näh- oder Bindefäden durch einen kontinuierlichen, mit Kontaktstellen (2) versehenen leitfähigen Faserstrang (1a) gebildet wird.

14. Halbzeug gemäß Anspruch 1, **dadurch gekennzeichnet, dass**
die von den Verstärkungsfasern (3) gebildete Struktur ein multiaxiales Gelege (19) ist, in welchem in mindestens einer der Lagen des multiaxialen Geleges an mindestens einer Position die Verstärkungsfasern (3) durch einen mit Kontaktstellen (2) versehenen kontinuierlichen elektrisch leitfähigen Faserstrang (1) ersetzt sind oder/und mindestens einer der Bindefäden des multiaxialen Geleges (19) durch einen kontinuierlichen, mit Kontaktstellen (2) versehenen leitfähigen Faserstrang (1a) gebildet wird.

15. Halbzeug gemäß Anspruch 1, **dadurch gekennzeichnet, dass**
in dem Halbzeug Verstärkungsfasern (3) und mindestens ein mit Kontaktstellen (2) versehener leitfähiger Faserstrang (1) durch einen Matrixbildner miteinander verbunden sind.

16. Verfahren zur thermographischen Untersuchung von Bauteilen aus Faserverbundwerkstoffen, die mindestens ein Halbzeug gemäß einem der Ansprüche 1 bis 15 enthalten, **dadurch gekennzeichnet, dass**
der mindestens eine leitfähige Faserstrang (1) über Kontaktstellen (2) mit einer Spannungsquelle verbunden wird, so dass Strom durch den mindestens einen leitfähigen Faserstrang (1) fließt, wobei das Bauteil sich aufgrund des elektrischen Widerstands beim Stromfluss durch die leitfähigen Faserstrang erwärmt und der Wärmeflusses im Bauteil mit einer Wärmebildkamera abgebildet wird.

17. Verfahren zur Lokalisierung von weiteren Kontaktstellen (2) in Bauteilen aus Faserverbundwerkstoffen, die mindestens ein Halbzeug gemäß einem der Ansprüche 1 bis 15 enthalten, **dadurch gekennzeichnet, dass**
ein leitfähiger Faserstrang (1) über seine Kontaktstellen (2) mit einer Spannungsquelle verbunden wird, so dass Strom durch den mindestens einen leitfähigen Faserstrang fließt, wobei das Bauteil aufgrund des elektrischen Widerstands beim Stromfluss durch den leitfähigen Faserstrang erwärmt wird
der Wärmeflusses im Bauteil mit einer Wärmebildkamera abgebildet wird die Positionen weiterer Kontaktstellen (2) anhand des aufgrund der Metallisierung erhöhten Wärmeflusses ermittelt werden
die ermittelten Positionen der weiteren Kontaktstellen (2) markiert und freigelegt werden, so dass sie als elektrische Anschlüsse genutzt werden können.

18. Verfahren zur Herstellung von Bauteilen aus Faserverbundwerkstoffen,
**dadurch gekennzeichnet, dass**
mindestens ein Halbzeug gemäß einem der Ansprüche 1 bis 15 mit weiteren Halbzeugen gemäß einem der Ansprüche 1 bis 15 oder/und Halbzeugen, die keinen sich kontinuierlich von einem Rand des Halbzeugs zu einem zweiten Rand des Halbzeugs erstreckenden mit Kontaktstellen (2) versehenen Strang (1) aus elektrisch leitfähigen Fasern enthalten, zu einem Faserverbund-Bauteil kombiniert werden.
